# EUROPÄISCHE PATENTANMELDUNG

(11) **EP 2 868 739 A1**
(43) Veröffentlichungstag der Anmeldung: **06.05.2015**
(21) Anmeldenummer: 14003474.5
(22) Anmeldetag: 09.10.2014
(51) Int. Cl.: C10L 3/08, C10J 3/00, F01K 23/06

(54) **Kraftwerk**

(30) Priorität: 29.10.2013 DE 102013017945
(71) Anmelder: Linde Aktiengesellschaft, 80331 München (DE)
(72) Erfinder: Heidrich, Thomas, 09600 Niederschöne OT Hetzdorf (DE); Gaube, Gerald, 01279 Dresden (DE); Bauersfeld, Dirk, 09599 Freiberg (DE); Kittelmann, Holger, 01109 Dresden (DE)
(74) Vertreter: Fischer, Werner

(57) **Zusammenfassung**

Kraftwerk, insbesondere GuD-Kraftwerk, mit wenigstens einer mittels eines Brenngases betriebenen Turbine (210) zur Erzeugung elektrischer Energie, dadurch gekennzeichnet, dass es mit einer Anlage (100) zur Erzeugung von Synthesegas und/oder synthetischem Erdgas gekoppelt ist, wobei in der Anlage (100) erzeugtes Synthesegas und/oder synthetisches Erdgas dem Brenngas der wenigstens einen Turbine (210) beigemischt wird.

## Beschreibung

Die vorliegende Erfindung betrifft ein Kraftwerk, eine Verwendung einer Anlage zur Erzeugung von Synthesegas oder synthetischem Erdgas, sowie eine Anlage und ein Verfahren zur Erzeugung von elektrischer Energie.

Bei sogenannten Gas-und-Dampf-Kombikraftwerken (kurz GuD-Kraftwerk) handelt es sich um Kraftwerke, bei denen Eigenschaften eines Gasturbinenkraftwerks und eines Dampfkraftwerks miteinander verbunden werden. Eine Gasturbine dient hierbei als Wärmequelle für einen nachgeschalteten Abhitzekessel, der wiederum als Dampferzeuger für eine Dampfturbine verwendet wird. Hiermit ist ein verglichen mit Gasturbinen im offenen Betrieb oder konventionell befeuerten Dampfkraftwerken höherer Wirkungsgrad erzielbar.

Verfahren zur Herstellung von Synthesegas (also im Wesentlichen wasserstoff- und kohlenmonoxidhaltigen Gasgemischen) z. B. aus festem organischem Einsatzmaterial, auch kurz als Vergasungsverfahren bezeichnet, sind bekannt. Vorteilhafterweise kommen als Einsatzmaterial für solche Verfahren Kohle oder Biomasse zum Einsatz. Bei Biomassevergasungsverfahren werden beispielsweise Alt- und Waldrestholz oder sogenannte Energiehölzer, aber auch Agrarreststoffe wie Stroh oder Häcksel verwendet.

Durch eine Vergasung von Biomasse zu Synthesegas mit nachgeschalteten Verfahrensschritten (sogenannte Biomass-to-Liquids-Verfahren, BTL) kann beispielsweise synthetischer Biokraftstoff gewonnen werden, der in seinen physikochemischen Eigenschaften bekannten Gas-to-Liquids-(GTL-) und Coal-to-Liquids-(CTL-)Kraftstoffen ähnlich ist. Ein Beispiel einer Anlage zur Herstellung von BTL-Kraftstoffen ist bei Kiener, C. und Bilas, I.: Synthetischer Biokraftstoff der zweiten Generation. Weltweit erste kommerzielle BTL-Produktionsanlage. Energy 2.0, Juli 2008, S. 42 - 44, gezeigt.

Es ist jedoch auch möglich, aus einem derartigem Synthesegas durch Methanisierung sogenanntes synthetisches Erdgas (engl. synthetic natural gas, SNG) zu erzeugen. Hierbei wird Synthesegas nach einer Reinigung einer Methanisierung zugeführt. Eine derartige Methanisierung erfolgt exotherm bei Temperaturen von 300 bis 450 °C und einem Druck zwischen 1 und 5 bar in Anwesenheit eines geeigneten Katalysators

Verfahren und Anlagen zur zumindest teilweisen Vergasung von festem, organischem Einsatzmaterial sind auch beispielsweise aus EP 0 745 114 B1, DE 41 39 512 A1 und DE 42 09 549 A1 bekannt. Die vorliegende Anmeldung betrifft hierbei insbesondere solche Verfahren bzw. Anlagen, die einen Niedertemperaturvergaser und einen Hochtemperaturvergaser aufweisen, wie nachfolgend erläutert. Gegenüber anderen Verfahren ermöglichen diese u.a. einen niedrigeren Verbrauch an Einsatzmaterial und weisen einen höheren Kaltgaswirkungsgrad auf.

In einem Niedertemperaturvergaser wird das Einsatzmaterial, beispielsweise Biomasse, durch Teilvergasung mit einem Vergasungsmittel bei Temperaturen zwischen ca. 300 °C und 600 °C zu Koks (im Fall von Biomasse sogenanntem Biokoks) und Schwelgas umgesetzt. Die Umsetzung wird im Rahmen dieser Anmeldung als "Schwelen" bezeichnet. Schwelen zeichnet sich bekanntermaßen durch ein unterstöchiometrisches Sauerstoffangebot und damit eine unvollständige Verbrennung bei vergleichsweise geringer Temperatur aus.

Das Schwelgas wird anschließend in eine Brennkammer des Hochtemperaturvergasers überführt und dort mit einem sauerstoffhaltigen Gas, beispielsweise mit mehr oder weniger reinem Sauerstoff, aber auch mit Luft und/oder sauerstoffhaltigen Abgasen, z.B. aus Gasturbinen oder Verbrennungsmotoren, partiell oxidiert. Durch diese Oxidation freiwerdende Wärme bewirkt einen Temperaturanstieg auf 1.200 °C bis 2.000 °C, beispielsweise 1.400 °C. Bei derartigen Bedingungen werden in dem Schwelgas enthaltene Aromaten, Teere und Oxoverbindungen vollständig zersetzt. Hierdurch bildet sich ein Synthesegas, das im Wesentlichen aus Kohlenmonoxid, Wasserstoff, Kohlendioxid und Wasserdampf besteht. Das Synthesegas kann an dieser Stelle auch als (Synthese-)Rohgas bezeichnet werden.

In einer weiteren Stufe wird, beispielsweise in einer in dem Hochtemperaturvergaser integrierten oder in einer diesem nachgeschalteten Quencheinheit, das so erzeugte Synthesegas mit Koks aus dem Niedertemperaturvergaser in Kontakt gebracht. Der Koks kann zuvor gesondert (z.B. durch Mahlen und Sichten) aufbereitet und dann in die Quencheinheit eingebracht werden. Durch endotherme Reaktionen zwischen Koks und Synthesegas wird letzteres auf etwa 900 °C abgekühlt. Dies bewirkt eine teilweise Umsetzung des Kohlendioxids zu Kohlenmonoxid.

Das so erzeugte kohlenmonoxidreiche Synthesegas kann anschließend weiter konditioniert werden. Die Konditionierung umfasst beispielsweise eine weitere Abkühlung, eine Entstaubung, eine Verdichtung und/oder die Abtrennung von Restkohlendioxid.

Ein derart gereinigtes bzw. konditioniertes Synthesegas kann anschließend einer Methanisierung zur Erzeugung von synthetischen Erdgas (SNG) unterzogen werden.

Mit einem derartigen synthetischen Erdgas können Turbinen zur Stromerzeugung betrieben werden. Eine direkte Zuordnung von Turbinen zu einer Anlage zur Herstellung von Synthesegas erweist sich aber als relativ kostenintensiv.

Eine andere Möglichkeit ist, das synthetische Erdgas in das Erdgasnetz abzugeben. Selbstverständlich ist eine Aufteilung in synthetisches Erdgas zur Verstromung oder zur Einspeisung ins Erdgasnetz in beliebigen Verhältnissen möglich.

Der bei der Vergasung erzeugte Dampf steht den Dampfturbinen oder einem Heizdampfsystem zur Verfügung.

Gemäß der vorliegenden Erfindung wird angestrebt, Investitionskosten niedrig zu halten z.B. durch Anbinden der synthetischen Erdgaserzeugung an bestehende Infrastrukturen eines Kraftwerksbetreibers oder eines kommunalen Versorgers. Es wird angestrebt, die ökologische Bilanz derartiger Unternehmen zu verbessern.

Diese Aufgabe wird gelöst durch ein Kraftwerk mit den Merkmalen des Patentanspruchs 1, eine Verwendung einer Anlage zur Erzeugung von Synthesegas oder synthetischem Erdgas mit den Merkmalen des Patanspruchs 3, eine Anlage zur Erzeugung von elektrischer Energie mit den Merkmalen des Patentanspruchs 4 und ein Verfahren zur Erzeugung von elektrischer Energie mit den Merkmalen des Patentanspruchs 5.

Es sei angemerkt, dass eine Anlage zur Erzeugung von Synthesegas mit einer Methanisierungsstufe zur Durchführung der Methanisierung ausgebildet sein kann. Es ist jedoch auch möglich, eine derartige Methanisierungsstufe separat vorzusehen oder in dem Kraftwerk, mit dem die Anlage gekoppelt ist, zu integrieren.

Erfindungsgemäß wird an eine bestehende Kraftwerksinfrastruktur, insbesondere eine GuD-Kraftwerksinfrastruktur, eine Anlage zur Erzeugung von Synthesegas oder synthetischem Gas angehängt bzw. gekoppelt. Erfindungsgemäß wird die Anlage in die Lage versetzt, die existierende Infrastruktur des Kraftwerks auszunutzen.

Da die Anlage zur Erzeugung von Synthesegas bzw. synthetischem Erdgas als Einsatzmaterial feste organische Stoffe wie etwa Holz oder andere geeignete Biomasse verwendet, ist es möglich, ein GuD-Kraftwerk wenigstens teilweise mit "nachhaltig erzeugtem bzw. "grünem" Prozessdampf und/oder nachhaltig erzeugtem Synthesegas bzw. synthetischem Erdgas teilweise zu beaufschlagen. Hierdurch ist die CO₂-Bilanz (Carbon Footprint) eines Kraftwerks optimierbar. Eventuelle Ausfälle der Anlage zur Erzeugung von Synthesegas aus festem organischem Einsatzmaterial können in einfacher Weise durch Anpassung der Kapazitäten des konventionellen GuD-Kraftwerks kompensiert werden.

Erfindungsgemäß ist es möglich, dass Betreiber von GuD-Kraftwerken, in der Regel Versorger wie etwa Stadtwerke, ihre Produkte, z.B. Strom und / oder Erdgas, um eine nachhaltige (aus Biomasse erzeugte) Komponente ergänzen bzw. erweitern können.

Insbesondere können auch die Kosten für eine Vergasungsanlage gesenkt werden, da Komponenten eines GuD-Kraftwerks genutzt werden können. Der Vorteil auf Seiten des GuD-Kraftwerks besteht andererseits in der Dampfeinkopplung und damit geringerem Primärenergieverbrauch. Ein Verbrennen von Synthesegas in einer Turbine erfolgt vorteilhafterweise nur, wenn das Netz nicht genug abnimmt. z.B. bei einem Sommerbetrieb der verteilten Blockheizkraftwerke eines Stadtwerks.

Vorteilhafte Ausgestaltungen der Erfindung sind Gegenstand der Unteransprüche.

Besonders bevorzugt ist das erfindungsgemäße Kraftwerk als GuD-Kraftwerk ausgebildet. Erfindungsgemäß kann die Erdgasaufnahme eines GuD-Kraftwerks durch Einsatz der erfindungsgemäßen Anlage zur Herstellung von Synthesegas bzw. synthetischem Erdgas aus festem organischem Einsatzmaterial vermindert werden.

Gemäß einer besonders bevorzugten Ausgestaltung wird ein Wärmetausch zwischen einer Gaskühlungseinrichtung der Anlage zur Erzeugung von Synthesegas und/oder synthetischem Erdgas und einem der Gasturbine eines Kraftwerks, insbesondere eines GuD-Kraftwerks, nachgeschalteten Abhitzekessel bereitgestellt. Mit einem derartigen Wärmetausch ist der Wirkungsgrad des Systems insgesamt weiter erhöht.

Besonders bevorzugt wird das in der Anlage erzeugte synthetische Erdgas dem Brenngas, insbesondere (natürlichem bzw. herkömmlichem) Erdgas, für die Gasturbine zugegeben. Hiermit lässt sich die Erdgasaufnahme eines GuD-Kraftwerks in wirksamer Weise vermindern.

Es sei auch darauf hingewiesen, dass eine direkte Beimischung von Synthesegas zum Brenngas einer Turbine innerhalb der Akzeptanzgrenzen der Turbine möglich ist. Überschüssige Synthesegasbestandteile können so verwertet werden oder aber bei genügender Akzeptanz durch die Gasturbeine könnte die Methanisierungsstufe auch entfallen.

Die Erfindung wird anhand der beigefügten Figur erläutert, in der eine bevorzugte Ausführungsform der Erfindung dargestellt ist.

Kurze Beschreibung der Zeichnungen
Figur 1 zeigt in schematischer Ansicht eine beispielhafte Anlage zur Herstellung von Synthesegas bzw. synthetischem Erdgas, die zur Verwendung mit einem GuD-Kraftwerk geeignet ist und
Figur 2 zeigt eine bevorzugte Ausführungsform eines erfindungsgemäßen Kraftwerks mit einer angeschlossenen Anlage zur Erzeugung von Synthesegas bzw. synthetischem Erdgas.

### Ausführungsform der Erfindung

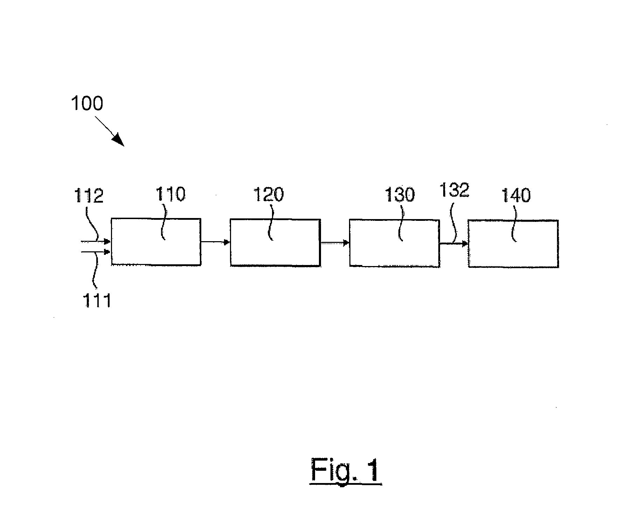

In Figur 1 ist eine Anlage schematisch dargestellt, welche zur Durchführung einer Synthesegasherstellung bzw. Herstellung von synthetischem Erdgas im Rahmen der Erfindung eingerichtet und insgesamt mit 100 bezeichnet ist. Die Anlage 100 umfasst eine Vergasungseinrichtung (Vergaser) 110. Die Vergasungseinrichtung 110 kann beispielsweise einen Niedertemperaturvergaser und einen Hochtemperaturvergaser (beide nicht im Einzelnen dargestellt) umfassen.

In die Vergasungseinrichtung 110 kann ein Einsatzmaterial, beispielsweise Biomasse, wie etwa Holz oder entsprechende Abfälle, eingespeist werden (schematisch dargestellt mittels Pfeil 111). Über eine Leitung 112 wird ferner Sauerstoff in die Vergasungseinrichtung eingespeist. Der Niedertemperaturvergaser ist zum Verschwelen des festen organischen Einsatzmaterials eingerichtet. Hierzu kann der Niedertemperaturvergaser extern, beispielsweise mit Abwärme des Hochtemperaturvergasers, auf eine geeignete Temperatur, beispielsweise 300°C bis 600°C, aufgeheizt werden. In einer Anfahrphase der Anlage können auch Anfahrbrenner eingesetzt werden.

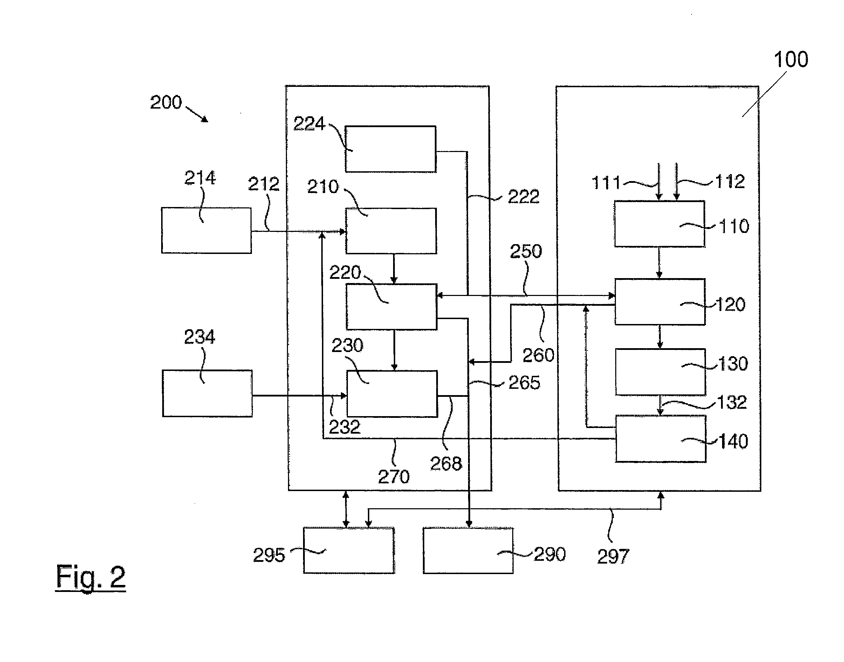

In dem Niedertemperaturvergaser wird ein Schwelgas erzeugt, und in den Hochtemperaturvergaser überführt. Der Hochtemperaturvergaser ist zweckmäßigerweise zweiteilig ausgebildet, und umfasst eine Oxidationseinheit und eine Quencheinheit (wiederum nicht im Einzelnen dargestellt). In der Oxidationseinheit wird das Schwelgas mit einem zugeführten sauerstoffhaltigen Gas teilweise oxidiert, wodurch sich Temperaturen von beispielsweise 1400°C bis 2000°C ergeben. Hierdurch wird Synthesegas erhalten. Das Synthesegas kann dann anschließend der Quencheinheit zugeführt werden, wo beispielsweise vermahlener Koks aus dem Niedertemperaturvergaser eingeleitet wird (nicht dargestellt). Durch die hierdurch ablaufenden endothermen Reaktionen kühlt sich die Gastemperatur in kurzer Zeit auf etwa 900°C auf, es tritt eine zumindest teilweise Reduktion ein. Das erhaltene Gasgemisch, das in diesem Zustand ein kohlenstoffmonoxidreiches Synthesegas darstellt, kann einem Kühler 120 zugeführt, und dort beispielsweise auf eine Temperatur von z.B. etwa 40°C abgekühlt werden. Das Synthesegas kann anschließend in einer Gasreinigungsanlage gereinigt werden. Als Beispiel für eine derartige Gasreinigungsanlage sei eine Rektisolwäsche genannt, in der das Synthesegas von nicht für die Synthese benötigten Stoffen befreit wird. Eine Gasreinigungsanlage ist schematisch dargestellt und mit 130 bezeichnet. Gereinigtes Synthesegas kann die Gasreinigungsanlage über eine Leitung 132 verlassen und ggf. weiteren Konditionierungs- bzw. Verarbeitungseinheiten zugeführt werden. Im Rahmen der vorliegenden Erfindung ist eine Gasreinigungsanlage nachgeschaltete Methanisierungsstufe 140 vorgesehen, welche weiter unter Bezugnahme auf Figur 2 weiter beschrieben wird, und zur Erzeugung von synthetischem Erdgas aus dem Synthesegas dient.

Eine bevorzugte Ausgestaltung eines erfindungsgemäßen Kraftwerks ist in Figur 2 mit 200 bezeichnet. Dieses Kraftwerk 200 ist als GuD-Kraftwerk ausgebildet und mit einer Anlage zur Erzeugung von Synthesegas, wiederum mit 100 bezeichnet, gekoppelt.

Die Komponenten der Anlage zur Erzeugung von Synthesegas bzw. synthetischem Erdgas entsprechen den bereits unter Bezugnahme auf Figur 1 dargestellten Komponenten.

In der Methanisierungsstufe 140 wird über die Leitung 132 eintretendes Synthesegas bei Temperaturen von 300 bis 450 °C und einem Druck zwischen 1 und 5 bar in Anwesenheit eines geeigneten Katalysators methanisiert. Das resultierende Gasgemisch enthält typischerweise bis zu 50 Prozent Kohlendioxid, und muss für eine Nutzung als synthetisches Erdgas durch Abtrennung von Kohlendioxid weiter aufbereitet werden. Auch diese weitere Aufbereitung erfolgt in der Methanisierungseinheit 140.

Es ist bevorzugt, dass das so aufbereitete synthetische Erdgas in seiner Zusammensetzung möglichst weitgehend dem natürlichen Erdgas entspricht, dem es zugemischt werden soll, wie weiter unten weiter erläutert wird.

Das GuD-Kraftwerk weist als wesentliche Komponenten eine Gasturbine 210, einen Abhitzekessel 220 und eine Dampfturbine 230 auf. Die mit einem Brenngas, beispielsweise Erdgas, über eine Leitung 212 von einer Brenngasquelle 214 beaufschlagte Gasturbine 210 dient hierbei sowohl zur Stromerzeugung als auch als Wärmequelle für den nachgeschalteten Abhitzekessel 220. Der Abhitzekessel 220 dient als Dampferzeuger für die Dampfturbine 230. Der Kondensator der Dampfturbine 230 wird über eine Leitung 232 mit Kühlwasser aus einer Kühlwasserquelle 234 beaufschlagt. Bei Einstellung eines höheren Temperatur- und Druckniveaus kann das Kühlwasser als Heitzwasser benutzt werden.

Der Abhitzekessel 220 wird über eine Leitung 222 mit Wasser aus einem Speisewassersystem 224 gespeist. Aus diesem Wasser wird mittels des heißen Abgases der Gasturbine 210 Dampf erzeugt. Dieser Dampf wird seinerseits zum Betreiben der Dampfturbine 230 eingesetzt, wodurch wiederum Strom erzeugt wird. In einem wie in Figur 2 schematisch dargestellten GuD-Kraftwerk wird typischerweise mit ein bis vier Gasturbinen 210 und einer Dampfturbine 230 Elektrizität erzeugt. Es ist möglich, dass jede dieser Turbinen 210, 230 jeweils einen Generator antreibt (sogenannte Mehrwellenanlage), oder auch eine Gasturbine mit der Dampfturbine auf einer gemeinsamen Welle einen Generator antreibt (sogenannte Einwellenanlage).

Die heißen Abgase der Gasturbine 210 werden in dem Abhitzekessel 220 zur Erzeugung von Wasserdampf verwendet. Der Dampf wird anschließend über einen herkömmlichen Dampfturbinenprozess entspannt. Es entfallen typischerweise ca. zwei Drittel der erzeugten elektrischen Leistung auf die Gasturbine und ein Drittel auf den Dampfprozess bzw. die Dampfturbine.

Gemäß der vorliegenden Erfindung ist nun vorgesehen, gereinigtes, konditioniertes und methanisiertes Synthesegas als synthetisches Erdgas über eine Leitung 270 dem Brenngas zuzugeben. Dies bedeutet, dass die Leitung 270 zweckmäßigerweise in der Leitung 212 zur Speisung der Gasturbine mit Brenngas mündet.

Es soll auch darauf hingewiesen werden, dass eine direkte Beimischung von Synthesegas zum Brenngas der Turbine in den Akzeptanzgrenzen der Turbine möglich ist. Überschüssige Synthesegasbestandteile können so verwertet werden oder aber bei genügender Akzeptanz durch die Gasturbine könnte die Methanisierungsstufe auch entfallen.

Der beschriebenen Idee folgend versorgt das Speisewassersystem 224 den Abhitzekessel 220 und auch die Gaskühleinrichtung 120 mit Wasser, beispielsweise über eine Leitung 250.

Der in der Gaskühleinrichtung 120 erzeugte Dampf wird über weitere Leitungen 260, 265, 268 in das Dampfsystem des Kraftwerkes 200 abgegeben. Dieser Dampf kann sowohl in der Dampfturbine 230 zur Verstromung als auch in einem Prozessdampfsystem 290 verwertet werden. Der in der Gaskühleinrichtung 120 erzeugte Dampf kann leicht an die geforderten Parameter für Druck und Temperatur angepasst werden.

Der in den jeweiligen Turbinen erzeugte Strom kann in ein Stromnetz (schematisch dargestellt und mit 295 bezeichnet) eingespeist werden. Strom aus diesem Stromnetz kann seinerseits (über eine schematisch dargestellte Leitung 297) verwendet werden, um die Anlage 100 zur Erzeugung von Synthesegas bzw. synthetischem Erdgas zu betreiben.

Insgesamt ist somit durch Ankopplung einer Anlage zur Erzeugung von Synthesegas aus festem, organischem Einsatzmaterial an ein GuD-Kraftwerk eine Beaufschlagung einer Gasturbine zum Teil mit Synthesegas bzw. aus diesem erzeugtem synthetischen Erdgas möglich. Gleichzeitig wird vom GuD-Kraftwerk Speisewasser zur Verfügung gestellt um Dampf oder ggf Heißwasser zurück zu erhalten. Dies bedeutet, dass für das Synthesegas keine eigene Gasturbine bzw. für die Vergasung keine eigene Infrastruktur zur Verfügung gestellt werden muss. Insbesondere kann somit in ökologisch vorteilhafter Weise durch Beimischung von nachhaltig erzeugtem Strom die CO₂-Bilanz (Carbon Footprint) des Kraftwerks verbessert werden.

Mit der Erfindung ist insbesondere eine günstige Ankopplung einer Vergasungsanlage, welche zur Erzeugung von Synthesegas dient, an eine bereits bestehende Infrastruktur, z.B. ein Kraftwerk, wie etwa ein GuD-Kraftwerk, möglich. Hiermit ist eine optimierte Betriebsmittelversorgung sowie Produktverwertung im Rahmen einer derartigen Infrastruktur bzw. Vergasungsanlage realisierbar.

## Patentansprüche

1. Kraftwerk, insbesondere GuD-Kraftwerk, mit wenigstens einer mittels eines Brenngases betriebenen Turbine (210) zur Erzeugung elektrischer Energie, **dadurch gekennzeichnet, dass** es mit einer Anlage (100) zur Erzeugung von Synthesegas und/oder synthetischem Erdgas gekoppelt ist, wobei in der Anlage (100) erzeugtes Synthesegas und/oder synthetisches Erdgas dem Brenngas der wenigstens einen Turbine (210) beigemischt wird.

2. Kraftwerk nach Anspruch 1, **dadurch gekennzeichnet, dass** die Anlage einen Vergaser (110) aufweist, in dem durch Schwelen ein teerhaltiges Schwelgas aus einem festen organischen Einsatzmaterial gewonnen werden kann, und in dem das Schwelgas durch partielle Oxidation und anschließende teilweise Reduktion zu einem Synthesegas umgesetzt wird, wobei das Synthesegas in einer dem Vergaser (110) nachgeschalteten Methanisierungseinheit (140) zur Bereitstellung von synthetischem Erdgas methanisiert wird.

3. Verwendung einer Anlage zur Erzeugung von Synthesegas und/oder synthetischem Erdgas mit einem Vergaser, in dem durch Schwelen ein teerhaltiges Schwelgas aus einem festen organischen Einsatzmaterial gewonnen werden kann und in dem das Schwelgas durch partielle Oxidation und anschließende teilweise Reduktion zu einem Synthesegas und anschließend durch Methanisierung des Synthesegases zu synthetischem Erdgas umgesetzt werden kann, zur Bereitstellung eines Brenngases oder einer Brenngasbeimischung für wenigstens eine Turbine (210) eines Kraftwerks, insbesondere eine Gasturbine (210) eines GuD-Kraftwerks (200).

4. Anlage zur Stromerzeugung mit wenigstens einem Kraftwerk, insbesondere einem GuD-Kraftwerk (200), und einer Anlage (100) zur Erzeugung von Synthesegas und/oder synthetischem Erdgas mit einem Vergaser, in dem durch Schwelen ein teerhaltiges Schwelgas aus einem festen organischen Einsatzmaterial gewonnen werden kann, und in dem das Schwelgas durch partielle Oxidation und anschließende teilweise Reduktion zu einem Synthesegas und anschließend durch Methanisierung des Synthesegases zu einem synthetischem Erdgas umgesetzt werden kann, wobei die Anlage derart eingerichtet ist, dass synthetisches Erdgas einem Brenngas für wenigstens eine Turbine des Kraftwerks, insbesondere eine Gasturbine (210) eines GuD-Kraftwerks (200), beigemischt wird.

5. Verfahren zur Erzeugung von elektrischer Energie, bei dem wenigstens eine Turbine eines Kraftwerks, insbesondere eines GuD-Kraftwerks, mittels eines Brenngases zur Erzeugung elektrischer Energie betrieben wird, wobei dem Brenngas Synthesegas und/oder synthetisches Erdgas beigegemischt wird.

6. Ankopplung einer Vergasungsanlage an ein Kraftwerk, insbesondere an ein GuD-Kraftwerk, zur Optimierung der Betriebsmittelversorgung und Produktverwertung im Sinne einer Resourcenschonung und Kosteneinsparung.
